# FASCICULE DE BREVET EUROPEEN

(11) **EP 1 295 232 B1**
(45) Date de publication et mention de la délivrance du brevet: **05.10.2011**
(21) Numéro de dépôt: 01949559.7
(22) Date de dépôt: 28.06.2001
(51) Int. Cl.: G06Q 10/00

(54) **PROCEDE D'ADRESSAGE ET DE TRAITEMENT DE COURRIER POSTAL OU ELECTRONIQUE**
VERFAHREN ZUM ADRESSIEREN UND BEARBEITEN VON POSTSENDUNGEN ODER ELEKTRONISCHEN NACHRICHTEN
POSTAL OR ELECTRONIC MAIL ADDRESSING AND PROCESSING METHOD

(30) Priorité: 28.06.2000 FR 0008361
(43) Date de publication de la demande: 26.03.2003
(73) Titulaire: Maarek, Eliane, 92100 Boulogne Billancourt (FR)
(72) Inventeur: Maarek, Eliane, 92100 Boulogne Billancourt (FR)
(86) Numéro de dépôt international: PCT/FR2001/002056
(87) Numéro de publication internationale: WO 2002/001434

(56) Documents cités:
- EP-A1- 0 272 355
- WO-A-99/21330
- GB-A- 2 225 999
- US-A- 5 420 403
- US-A- 5 754 306
- US-A- 5 987 508
- US-A- 6 052 445

## Description

La présente invention est relative à un procédé, un dispositif et des moyens matériels et logiciels d'adressage et de traitement du courrier.

La présente invention s'applique notamment au courrier postal. Un exemple de réalisation ne faisant pas partie de l'invention s'applique au courrier électronique (couramment appelé e-mail).

On rencontre notamment dans ces domaines des risques d'erreurs liés à l'adresse ; ainsi que des frais considérables de tri et d'acheminement du courrier, surtout du courrier postal.

On a proposé, pour éviter des erreurs de lecture d'adresses, de remplacer l'adresse postale par un numéro d'identification à vie de chaque personne physique ou morale. Un tel numéro d'identification à vie est indiqué sur l'enveloppe du courrier postal et lu par un lecteur optique afin de trouver, en interrogeant une base de données, le nom et l'adresse de la personne à laquelle ce numéro a été attribué.

L' inconvénient majeur de ce projet est l'attribution d'un numéro spécifique à chaque personne pour toute sa vie, ce qui demande, d'une part, un énorme travail de recensement de toute une population; et, d'autre part, pour les émetteurs de courriers, l'apprentissage et la mémorisation de ce numéro d'identification, pour chaque personne ou société à laquelle ils doivent écrire.

Le document GB 2 225 999 est relatif à un procédé de tri postal comprenant l'application à un élément destiné à être posté d'un message codé indiquant une adresse de destination. Le message est codé de manière à pouvoir être lu par une machine et l' élément posté est transmis à un ou plusieurs emplacements de tri ayant des machines aptes à lire le message codé. Les machines sont adaptées pour trier l' élément posté en fonction de l'adresse indiquée par le message codé. De manière typique, le message codé est représentatif d'un numéro de téléphone du destinataire et il y a aussi un deuxième message codé qui est représentatif de l'adresse ou de l'identité d'un expéditeur.

Le message codé est représentatif d'un numéro de téléphone du destinataire ; car, à cette époque, la structure du numéro de téléphone du destinataire indiquait sa position géographique. La structure du numéro de téléphone du destinataire indiquant sa position géographique permettait alors de trier le courrier par étapes successives, jusqu'à sa destination finale, correspondant à la localisation géographique du poste téléphonique.

Actuellement, plus de la moitié des numéros de téléphone sont des numéros appelés par la profession des télécommunications « numéros virtuels » ou « numéros non-géographiques » , plus communément des numéros de téléphone mobile ou des numéros « gratuits » ou « semi-gratuits » (numéros verts, azur).Ces « numéros virtuels » ou « numéros non-géographiques » ne présentent pas de correspondance avec une localisation géographique, ce qui s'oppose à l'utilisation d' un procédé de tri postal selon le document GB 2 225 999.

Actuellement, moins de la moitié des numéros de téléphone sont des numéros appelés par la profession des télécommunications «numéros fixes », de type TZ APBQ MCDU.

Ces «numéros fixes » commencent effectivement par un «TZ », ou Z est un numéro dit de « zone », mais cette zone, définie par l'opérateur historique de télécommunications, ne correspond pas aux zones de tri postal. Les chiffres suivants des «numéros fixes », dits « ABPQ », appelés autrefois « indicatifs », avaient un lien avec des « quartiers » ou « arrondissements », mais sont maintenant alloués selon des critères ne correspondant plus avec la localisation géographique.

De plus, actuellement, obligation est faite par une Directive de la Commission Européenne de rendre « portables » tous les numéros de téléphone, pour permettre par exemple à une personne résidant en région parisienne de conserver son numéro après son déménagement en province. Le lien entre numéro de téléphone et localisation géographique ne peut par conséquent plus être exploité dans l'Union Européenne , ce qui s'oppose à l'utilisation d'un procédé de tri postal selon le document GB 2 225 999.

Le document US 6,052,445 est relatif à un système et des procédés de routage de télécopie par la voie la plus économique, en utilisant l'adresse Internet du destinataire lorsque celle-ci figure dans un tableau de correspondance d'adresses Internet et de numéros de télécopie et en composant directement le numéro de télécopie du destinataire lorsque l'adresse Internet du destinataire ne figure pas dans ce tableau de correspondance d'adresses Internet et de numéros de télécopie.

L' inconvénient majeur de ce système et de ces procédés de routage de télécopie par la voie la plus économique est de demander un travail considérable de construction de ce tableau de correspondance d'adresses Internet et de numéros de télécopie de tous les destinataires et de rendre indispensable l'achat d'un système de routage de télécopie par la voie la plus économique, comportant un dispositif d'aiguillage de télécopie contenant ce tableau de correspondance d'adresses Internet et de numéros de télécopie et un processeur configuré pour exécuter un de ces procédés de routage de télécopie par la voie la plus économique.

Un but de la présente invention est de proposer un nouveau procédé, plus simple et plus économique que le procédé de tri postal selon le document GB 2 225 999. et que les procédés de routage de télécopie selon le document US 6,052,445.

Le document EP0272355 est relatif au courrier postal. Dans ce brevet, l'adresse utilisée doit correspondre à une zone géographique déterminée.

La présente invention utilise un adressage par un numéro (le numéro de téléphone) qui est indépendant de la zone géographique.

Les numéros « fixez » n'ont plus de nos jours, de lien avec les zones géographiques comme cela était le cas il y a quelques dizaines d'années.

Les numéros de téléphone mobile ainsi que les numéros de téléphone IP n'ont, par définition, strictement aucun lien avec la zone géographique.

Le document EP0272355 ne pourrait plus être utilisé aujourd'hui.

Un autre but de l'invention consiste à simplifier la démarche des émetteurs de courrier postal , grâce à l'utilisation des chiffres arabes du numéro de téléphone ou de télécopie, fixe, ou mobile, du destinataire comme moyen d'indication de l'adresse postale .

Dans la présente description et dans les revendications, on désigne par l'expression « numéro de téléphone » un numéro de téléphone ou de télécopie, fixe, ou mobile, ou non-géographique.

Un autre but de l'invention est l'utilisation des bases de données déjà existantes d'annuaire fonctionnant selon le principe de l'annuaire inverse pour identifier le nom et l'adresse du destinataire.

La présente invention part du principe que les numéros de téléphone, fixes ou mobiles, sont maintenant extrêmement répandus, et que leur mémorisation, personnelle ou professionnelle, est généralisée en chiffres arabes, à la différence des adresses postales.

Les numéros de téléphone en chiffres arabes constituent un système d'informations générateur de moins d'erreurs de lecture et d'interprétation que les adresses en lettres. L'utilisation de chiffres arabes permet enfin de rendre un service considérable aux émetteurs de courrier, et diminue également significativement les coûts d'erreurs.

Le procédé selon l'invention comporte principalement les étapes d'utiliser comme moyen d'identification du destinataire un numéro de téléphone en chiffres arabes, de faire lire ce numéro de téléphone en chiffres arabes, d'interroger les bases de données existantes d'annuaire fonctionnant selon le principe de l'annuaire inverse pour identifier le nom et l'adresse du destinataire, appliquer au courrier son adresse de délivrance au destinataire, par exemple l'adresse postale, et éventuellement le nom du destinataire.

Le procédé selon la présente invention est plus simple et plus économique que les procédés connus ; car sa mise en pratique est immédiate, on utilise des moyens existants tels que les annuaires inverses pour résoudre les problèmes d'adressage, et on superpose au simple service usuel d'acheminement du courrier une multitude de services « à valeur ajoutée ».

Grâce au procédé selon l'invention, on simplifie les relations entre le grand public et les sociétés ou entre les sociétés entre elles, en modernisant et dynamisant le courrier avec les avantages suivants:
- la mémorisation par les utilisateurs des numéros de téléphone est facile ;
- la tenue des agendas personnels est facilitée car on y inscrit seulement les numéros de téléphone et de moins en moins les adresses ;
- on peut, pour une même personne, inscrire l'un quelconque de ses numéros de téléphone, fixe ou mobile
- on peut, pour une société, inscrire l'un ou l'autre de ses numéros de téléphone (fax, numéro vert, numéro indigo ou autres) sans avoir besoin de connaître son adresse.

Dans le cas particulier du courrier électronique qui fait l'objet d'un example de réalisation ne faisant pas partie de l'invention, il arrive également souvent que l'on ne connaisse pas exactement "l'e-mail" de son correspondant, parce que ces adresses de courrier électronique sont difficiles à mémoriser et que le seul changement de position d'un point ou de l'arobaste rende inopérante une telle adresse ; par contre on connaît en général, son numéro de téléphone dont la mémorisation est facile.

La mise en oeuvre de ce procédé nécessite que le courrier passe par un centre spécifique de traitement, éventuellement situé dans un centre de tri, et/ou de routage, pour réaliser au moins les opérations suivantes :
- apposition de l'adresse postale du titulaire du numéro de téléphone en chiffres arabes .

Le procédé selon l'invention peut accessoirement comporter , à la différence du mode actuel de traitement du courrier postal e, qui ne comporte aucun service supplémentaire, la mise en oeuvre d'un ou plusieurs "services à valeur ajoutée", fonctions de l'émetteur et/ou du destinataire, selon la liste non limitative suivante :
- apposition du nom du titulaire du numéro de téléphone avec l'adresse postale correspondante sur l'enveloppe et acheminement optimisé dans le cas du courrier postal ;
- interdiction d'acheminement selon les instructions du destinataire (par exemple interdiction d'acheminement du courrier publicitaire, ou interdiction de courrier émis par un émetteur ou une liste d'émetteurs spécifique) ;
- la sélection des émetteurs (en fonction par exemple de leur numéro de téléphone ou de leur adresse électronique), en particulier des émetteurs d'information ou de publicité ;
- transfert d'adresse postale provisoire ou définitif (par exemple pour une personne en vacances ou en déplacement ou hospitalisée, ou encore pour une société en formation) pour le courrier postal : vers une autre adresse postale ;
- un retour à l'envoyeur sous conditions
- copie du courrier électronique vers une ou plusieurs autres adresses e-mail ;
- envoi d'un message d'alerte (par exemple par SMS) au destinataire du courrier ;
- masquage du numéro de téléphone pour usagers ne voulant pas que leur numéro de téléphone figure à côté de leur adresse (abonné en liste rouge par exemple) dans le cas du courrier postal ;
- envoi à une personne particulière désignée par l'émetteur à l'intérieur d'une société, d'une famille, d'une association ... ;
- introduction du courrier postal dans une pochette portant le nom et l'adresse ainsi qu'éventuellement addition d'un message, par exemple publicitaire, avec l'enveloppe dans la pochette ;
- mise à charge du destinataire des frais d'acheminement du courrier postal (par exemple l'équivalent du timbrage), de façon analogue au PCV en téléphonie, l'expression PCV signifiant que le prix est payé par le destinataire ;
- mise à charge de l'émetteur et facturation "différée" des frais d'acheminement du courrier postal ;
- l'avis de réception du courrier postal ;
- ou tout autre service ou combinaison de services complémentaires, fonction notamment des caractéristiques d'abonnement ou d'équipement de l'émetteur et/ou du destinataire ; ainsi que l'apposition éventuelle d'un code permettant, pour le courrier postal, un tri automatique, ce code pouvant être, par exemple, un code à barres.

Un example de réalisation d'un procédé d'adressage et de traitement de courrier postal comporte les étapes suivantes :
- adresser le courrier en utilisant comme indication du destinataire un numéro, en chiffres arabes, de téléphone, figurant dans au moins une base de données existante, fonctionnant selon le principe de l'annuaire inverse pour identifier le nom et l'adresse du destinataire à partir dudit numéro de téléphone;
- rechercher au moins l'adresse de délivrance du courrier au destinataire correspondant audit numéro de téléphone dans ladite base de données existante, fonctionnant selon le principe de l'annuaire inverse pour identifier le nom et l'adresse du destinataire à partir dudit numéro de téléphone;
- appliquer au courrier son adresse de délivrance au destinataire, par exemple l'adresse postale ou électronique, et éventuellement le nom du destinataire.
- diriger le courrier en fonction de ladite adresse de délivrance au destinataire;
- et faire parvenir le courrier à ladite adresse de délivrance au destinataire.

Dans un autre exemple, une enveloppe permet de mettre en oeuvre un procédé d'adressage et de traitement de courrier postal.

Dans un procédé d'adressage et de traitement de courrier postal l'émetteur peut utiliser une enveloppe vierge usuelle et se contenter d'y inscrire le numéro de téléphone du destinataire. Un système de cadrage automatique sur les chiffres, faisant partie du module de lecture optique, rend possible une lecture optique correcte. Cependant, pour faciliter la lecture de ce numéro de téléphone, il est préférable de prévoir une enveloppe avec une zone dédiée comportant des cases séparées dans lesquelles l'émetteur inscrira les chiffres composant ledit numéro de téléphone. Selon une autre variante de mise en oeuvre, on peut utiliser une enveloppe comportant, à côté de la zone dédiée comportant les cases destinées à recevoir les chiffres dudit numéro de téléphone, une autre zone dédiée destinée à recevoir le nom et l'adresse du destinataire ; cette adresse peut être soit imprimée directement sur l'enveloppe dans cette deuxième zone, soit imprimée sur une étiquette (autocollante ou non) qui sera apposée sur l'enveloppe. Avantageusement, l'émetteur du courrier peut employer ces enveloppes spéciales comportant des cases destinées à l'inscription du numéro de téléphone.

Les chiffres constituant le numéro de téléphone du destinataire sont inscrits par l'émetteur, case par case, et le courrier est ensuite traité par automatisation pour assurer l'impression des coordonnées postales du destinataire, et éventuellement l'identification du destinataire et/ou l'impression de codes additionnels pour automatisation du tri et/ou pour un traitement particulier.

Pour le courrier postal, un procédé d'adressage et de traitement du courrier postal comporte avantageusement les étapes de traitement suivantes :
a) lire sur le courrier un numéro de téléphone en chiffres arabes, qui indique le destinataire ;
b) transmettre ledit numéro de téléphone lu à l'étape a) en vue d'interroger une base de données fonctionnant en « annuaire inversé » ;
c) interroger la base de données fonctionnant en « annuaire inversé », de manière à recevoir un signal de réponse comportant au moins l'adresse de destination correspondant audit numéro de téléphone, et éventuellement le nom du destinataire ;
d) ajouter ou associer au moins l'adresse de destination audit courrier, de manière à permettre un acheminement dudit courrier de manière fiable et économique.

En plus de l'adresse de délivrance du destinataire, la machine peut apposer sur une enveloppe ou une pochette contenant l'enveloppe :
- un code permettant un tri automatisé ;
- un ou plusieurs codes ou signes additionnels correspondant à un ou plusieurs services « à valeur ajoutée », effectués lors du traitement du courrier.

L'invention a pour objet un dispositif de traitement de courrier postal selon le teste de la revendication 1.

Un dispositif de traitement de courrier selon l'invention comporte généralement:
un module comprenant un programme de traitement ;
un module de lecture ;
une base de données ;
et un module d'écriture ;
de sorte que, lorsqu'une enveloppe passe dans le module de lecture, le programme de traitement commande successivement la lecture du numéro en chiffres arabes porté par l'enveloppe, l'interrogation de la base de données pour obtenir l'adresse effective correspondant au numéro en chiffres arabes lu, et l'écriture de ladite adresse par le module d'écriture.

Le dispositif pour la mise en oeuvre d'un procédé selon l'invention, pour le courrier postal, comprend habituellement : une base de données utilisée selon le principe de l'annuaire inverse ; une machine qui réalise la lecture des chiffres composant le numéro de téléphone, puis interroge la base de données et imprime le nom et les coordonnées postales correspondant au numéro de téléphone et ajoute éventuellement un code, à barres par exemple qui permettra le tri automatique ; et des enveloppes comportant les chiffres du numéro de téléphone du destinataire.

Avantageusement, le dispositif pour le courrier postal peut comporter, avant le module de lecture, un module d'entrée des enveloppes ; et après le module d'écriture, un module de répartition automatique des enveloppes dans des bacs, les modules d'entrée, de lecture, d'écriture et de répartition étant parcourus successivement par les enveloppes.

De préférence, un dispositif pour le courrier postal comporte en outre : entre le module de lecture et le module de traitement, un module comprenant un programme d'enregistrement des enveloppes, et/ou un module comprenant un fichier des enveloppes traitées ; et entre le module de lecture et le module d'écriture, un module d'impression de code, code à barres par exemple; de sorte que la lecture du numéro de téléphone par le module de lecture :
- déclenche l'enregistrement de l'enveloppe par le module comprenant le programme d'enregistrement des enveloppes qui lui affecte un numéro d'ordre ;
- commande l'impression sur l'enveloppe d'un code à barres correspondant audit numéro d'ordre, par le module d'impression ;
- commande la mise en mémoire, dans le fichier des enveloppes traitées, du numéro de téléphone et du numéro d'ordre.

Avantageusement, le module de traitement d'un dispositif pour le courrier postal :
- interroge le fichier des enveloppes traitées pour en extraire le numéro de téléphone et le numéro d'ordre ;
- interroge la base de données pour obtenir l'adresse effective correspondant au numéro de téléphone.

De préférence, le module de traitement commande l'écriture de l'adresse par le module d'écriture après vérification de la conformité entre le numéro d'ordre et le code porté par l'enveloppe et commande éventuellement l'impression d'un autre code correspondant à un service particulier.

La mise en oeuvre de ce procédé peut nécessiter, pour l'organisme de traitement du courrier, que les différents organismes gérant les abonnements téléphoniques communiquent les données nécessaires au centre de traitement du courrier.

Le cas des abonnés sur liste rouge nécessite un traitement particulier parce qu'il faut éviter qu'apparaissent simultanément sur l'enveloppe le numéro de téléphone, le nom et l'adresse du destinataire.

Dans ce but, les données transmises à l'organisme de traitement du courrier doivent comporter un code qui permet de reconnaître que l'abonné, dont le numéro est lu, est sur liste rouge. On peut alors : soit imprimer en plus du nom et des coordonnées postales du destinataire des signes qui masquent les chiffres du numéro de téléphone ; soit imprimer une étiquette qui vient recouvrir les cases du numéro de téléphone ; soit imprimer une pochette dans laquelle est introduit le courrier à traiter.

L'utilisation d'une telle pochette est intéressante pour permettre d'ajouter au courrier une publicité ou un mailing. Dans le cas d'un mailing, on pourra employer, soit une enveloppe contenant un courrier personnalisé, soit une simple carte portant le numéro de téléphone et cette carte sera introduite dans la pochette avec le mailing.

L'invention sera mieux comprise grâce à la description qui va suivre donnée à titre d'exemple non limitatif en référence aux dessins annexés dans lesquels :
- La figure 1 représente schématiquement une vue d'un mode de réalisation d'une enveloppe spécifique permettant la mise en oeuvre du procédé selon l'invention.
- La figure 2 représente schématiquement une vue d'un autre mode de réalisation d'une enveloppe permettant la mise en oeuvre du procédé selon l'invention.
- La figure 3 représente schématiquement une vue d'une pochette destinée à recevoir l'enveloppe, selon une variante de réalisation de l'invention.
- La figure 4 représente schématiquement un organigramme illustrant une mise en oeuvre simplifiée du procédé selon l'invention.
   La figure 5 représente schématiquement un organigramme illustrant une deuxième mise en oeuvre du procédé selon l'invention.
   La figure 6 représente schématiquement un organigramme illustrant une troisième mise en oeuvre, plus complète, du procédé selon l'invention.

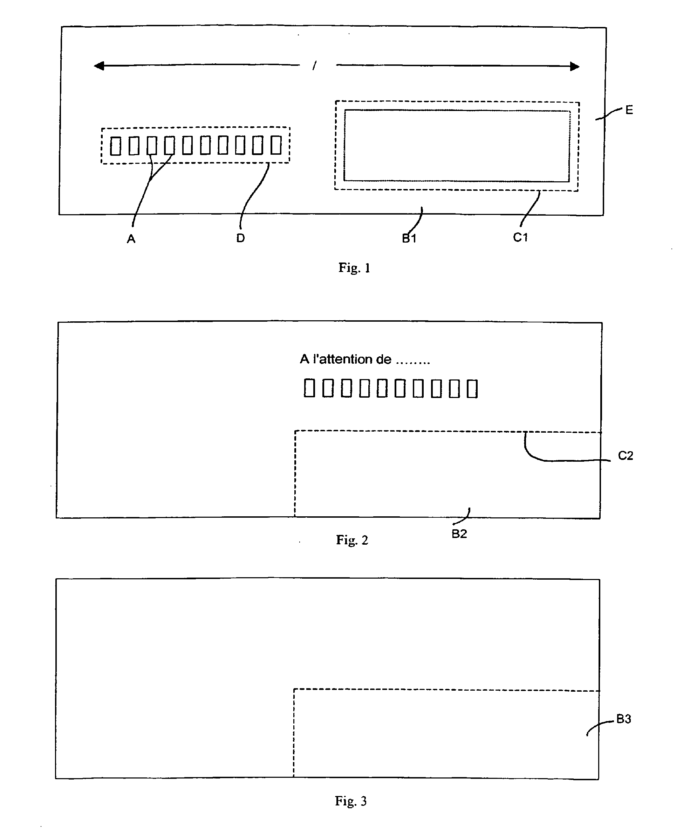

Sur la figure 1, une enveloppe spécifique permettant la mise en oeuvre d'un procédé selon l'invention (courrier national) comporte deux zones A et B₁.

La zone A comporte 10 cases (courrier national) dans lesquelles l'émetteur du courrier va écrire, un par un et case par case, les chiffres composant le numéro de téléphone du destinataire du courrier.

La zone B₁ est libre et, de préférence, comme représenté, mais non obligatoirement, délimitée par un cadre rectangulaire C₁, à l'intérieur duquel on peut avantageusement disposer une indication de ne rien écrire dans cette case.

Selon une variante non représentée, pour un courrier international, une enveloppe spécifique peut comporter deux zones A₁ et B₁, la zone A₁ comportant davantage de cases que précédemment (le numéro de téléphone international étant plus long qu'un numéro national car il inclut un code de pays) afin que l'émetteur du courrier puisse écrire, un par un et case par case, les chiffres composant le numéro de téléphone international du destinataire du courrier.

Un cadre D imprimable entoure une zone A ou une zone A₁. Ce cadre D imprimable délimite une surface rectangulaire destinée à l'impression d'une barre rectangulaire noire pour empêcher la lecture du numéro de téléphone du destinataire inscrit par l'émetteur dans le cas d'un destinataire abonné sur liste rouge, c'est-à-dire abonné sur la liste des numéros de téléphone devant rester confidentiels.

Sur la figure 2, l'enveloppe représentée comporte une zone B₂ dans la partie inférieure droite, au-dessus de laquelle le numéro de téléphone peut être inscrit, dans des cases pré-imprimées ou en l'absence de cases, en tout emplacement de la surface extérieure au cadre C₂ de la figure 2.

Une indication supplémentaire de destinataire particulier est possible après la mention : "à l'attention de", dans le cas où le numéro de téléphone est celui d'une entreprise ou d'une organisation regroupant plusieurs personnes, voire même une famille.

Sur la figure 3 est représenté un exemple de pochette dans laquelle sera placé le courrier ou l'enveloppe après lecture d'un numéro de téléphone ou d'un numéro d'ordre.

Le recto de pochette, seul visible sur la figure, est opaque, ce qui empêche de lire ce qui est inscrit au recto de l'enveloppe insérée dans la pochette, et permet de masquer le numéro de téléphone inscrit sur cette enveloppe.

Le verso de pochette peut être transparent, pour permettre de lire l'indication éventuelle de l'expéditeur portée au verso de l'enveloppe insérée dans la pochette.

La zone B₃ est destinée à recevoir l'application de l'adresse.

Cette pochette contenant le courrier ou l'enveloppe permet en outre d'ajouter au courrier des éléments additionnels tels que publicité, circulaire, mailing ou autres.

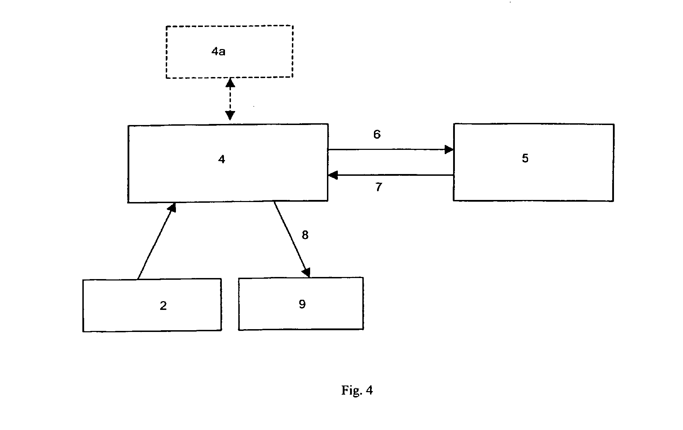

La figure 4 est un organigramme qui illustre une mise en oeuvre simplifiée de l'invention.

Sur cette figure 4, une installation de mise en oeuvre de l'invention comporte un dispositif de lecture optique 2, qui lit le numéro de téléphone inscrit sur l'enveloppe et envoie, par la voie 3, un signal correspondant au numéro de téléphone lu vers le module 4 de traitement.

Le module 4 de traitement contient un programme de traitement, interroge par la voie 6 une ou des bases de données 5 fonctionnant en annuaire inverse, et reçoit par la voie 7 un signal de réponse représentatif de l'adresse, et éventuellement du nom, correspondant au numéro de téléphone.

Le module de traitement 4 interroge alors éventuellement un module optionnel 4a pour savoir si l'émetteur et/ou le destinataire, bénéficie(nt) d'un service spécial tel que, par exemple, le refus, par le destinataire, de recevoir de la publicité.

En fonction des instructions reçues des modules 5 et 4a, le module de traitement 4 transmet, par la voie 8, des signaux permettant au module 9 d'écriture, d'imprimer le nom et l'adresse sur l'enveloppe, et éventuellement d'imprimer des indications spéciales.

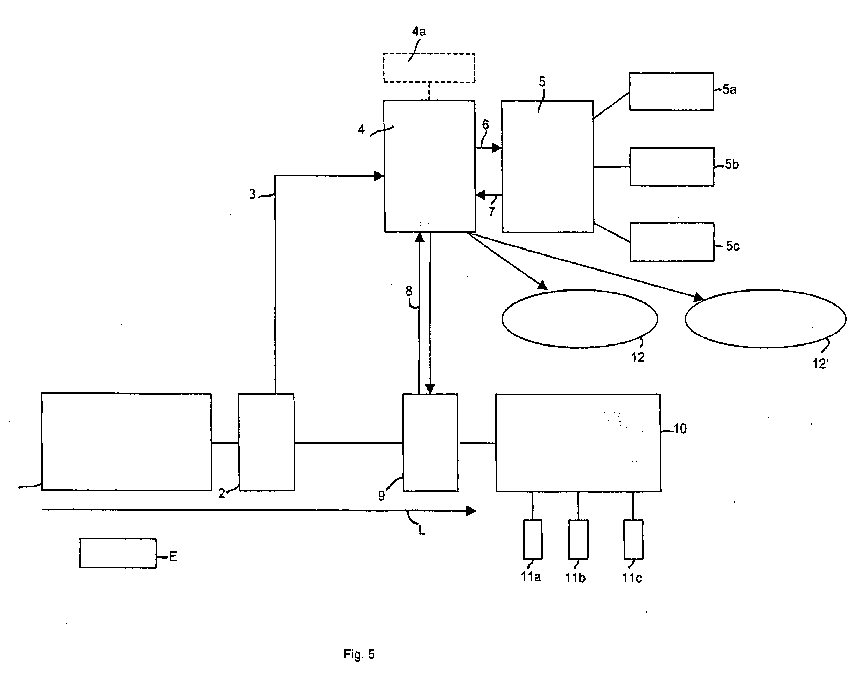

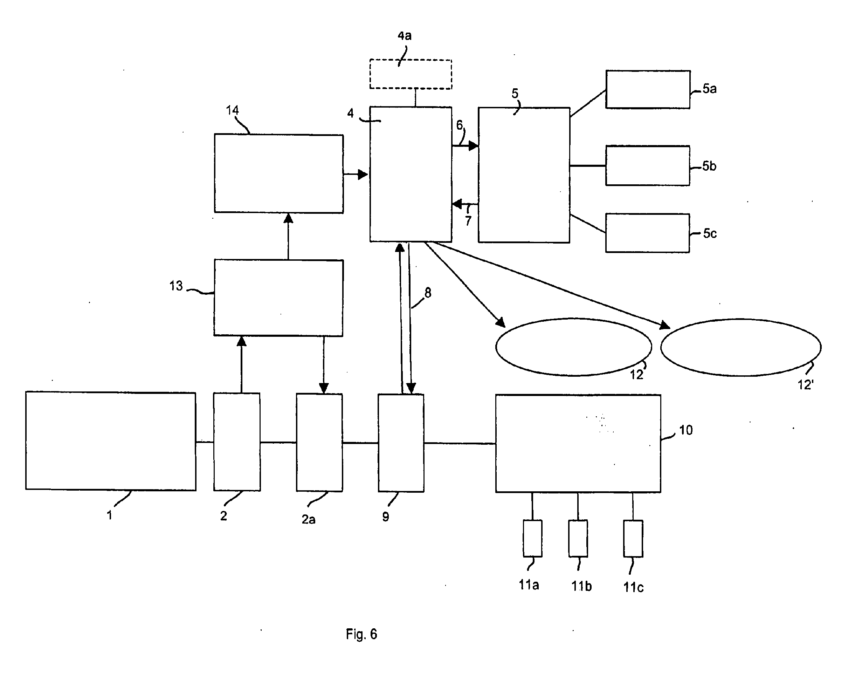

Cette disposition simplifiée de mise en oeuvre de l'invention, représentée à la figure 4, permet un traitement manuel du courrier. Elle peut se révéler avantageuse, soit pour réaliser une installation pilote du procédé, soit dans les zones géographiques où la masse de courrier à traiter est insuffisante pour justifier, économiquement, les installations automatiques décrites ci-après, en relation avec les figures 5 et 6.

En effet, pour économiser le lecteur optique 2, un opérateur peut lire le numéro de téléphone et le taper sur un clavier d'ordinateur relié par voie 3 au module 4 . Le module 2 peut ainsi être, soit un module de lecture optique, soit un poste de lecture visuelle et de saisie manuelle au clavier, sans sortir du cadre de la présente invention.

Le module 4 inscrit l'adresse, incluant éventuellement un nom, sur l'enveloppe ou sur une pochette dans laquelle est insérée (manuellement ou automatiquement) l'enveloppe ; ou émet une étiquette portant l'adresse, qui est alors apposée (manuellement ou automatiquement) sur l'enveloppe ou une pochette dans laquelle est insérée l'enveloppe.

En référence à la figure 5, les éléments identiques ou fonctionnellement équivalents aux éléments de la figure 4 sont repérés par des chiffres de référence identiques aux chiffres de la figure 4.

Sur la figure 5, une installation plus complexe de mise en oeuvre de l'invention comporte un module 1 de réception des enveloppes pour présenter les enveloppes au module 2.

Comme décrit en référence à la figure 4, le module 2 ou lecteur optique 2 lit le numéro de téléphone, et le transmet au module de traitement 4, lequel interroge par la voie 6 la base de données 5 et éventuellement le module 4a.

Comme représenté à la figure 5, la base de données 5 est reliée ou constituée des bases de données 5a, 5b, 5c ou autres, de divers opérateurs téléphoniques et est utilisée selon le principe de l'annuaire inverse.

Il peut arriver que le numéro de téléphone soit inconnu de ces bases de données 5a, 5b, 5c ou autres ou soit mal inscrit dans les cases A : dans ce cas, le module de traitement 4 envoie un signal au module 12 de traitement des erreurs, lequel commande l'évacuation de l'enveloppe qui est ensuite traitée manuellement.

Par ailleurs, si le module 4a envoie au module 4 un signal , par exemple, d'interdiction de publicité (pour les abonnés de la liste orange), le module 4 envoie un signal qui provoque un traitement particulier de ce courrier par un module 12a.

Dans l'installation de la figure 5, les enveloppes en fin de parcours sont triées et automatiquement regroupées dans les bacs tels que 11a, 11b, 11c correspondant à des routages spécifiques.

Dans l'installation de la figure 5, les enveloppes E sont acheminées de poste en poste par un transporteur L.

Pour éviter qu'il n'y ait pas correspondance parfaite entre le cheminement des enveloppes E et l'acheminement des signaux vers le module d'impression 9 de sorte que ce qui est imprimé sur une enveloppe risque de ne pas correspondre à la bonne enveloppe, des moyens ou dispositions sont prévus pour assurer cette correspondance.

Pour des centres de tri de faible importance, il faut introduire une nouvelle enveloppe E seulement lorsque la précédente est tombée dans un des bacs 11.

Pour des centres de tri importants, on applique à l'enveloppe, au moment de sa lecture, un signe distinctif qui assure ensuite sa bonne impression.

En référence à la figure 6, les éléments identiques ou fonctionnellement équivalents aux éléments de la figure 5 sont repérés par des chiffres de référence identiques aux chiffres de la figure 5.

Sur la figure 6, entre le module de lecture optique 2 et le module de traitement 4, sont interposés deux modules 13 et 14.

Le module 13 comporte un programme qui enregistre le numéro de téléphone qui vient d'être lu optiquement et lui associe un numéro d'ordre ou un signe distinctif par tout moyen approprié : par exemple au moyen d'un code à barres, lequel est imprimé immédiatement sur l'enveloppe par le module 13. Avantageusement, le numéro d'ordre inclut le numéro du centre de traitement, la date et l'heure, un numéro de lot, un numéro dans le lot.

Ainsi l'enveloppe porte un signe distinctif, qui permet un traitement désynchronisé par lots, ainsi qu'un traitement ultérieur des erreurs.

Le module 13, associant un numéro d'ordre à chaque numéro de téléphone correspondant à une enveloppe portant son numéro d'ordre ou signe distinctif imprimé, envoie ces deux numéros au module 14.

Le module 14 contient un fichier des enveloppes traitées et met en mémoire ces deux numéros dans un fichier pouvant servir en cas de réclamations éventuelles.

Le module 4 interroge le fichier des enveloppes traitées, puis interroge, numéro par numéro, comme dans le cas précédent, la base de données 5 et éventuellement le module 4a.

Le signal de réponse est transmis au module 4 qui commande l'écriture de l'adresse par le module d'impression 9.

Au niveau du module 9, l'impression n'est déclenchée qu'après lecture du numéro d'ordre ou signe distinctif précédemment apposé sur l'enveloppe et vérification que ce numéro d'ordre ou signe distinctif correspond bien au numéro d'ordre lié au signal d'impression.

Ces opérations, bien que décrites comme liées les unes aux autres dans un ordre séquentiel peuvent être dissociées dans le temps.

On peut ainsi, dans un premier temps, stocker dans une mémoire, toutes les données provenant des bases de données 5 et du module 4a et ne déclencher l'impression qu'ultérieurement.

On peut dissocier dans le temps toutes les opérations, à condition de disposer d'autant de mémoires que nécessaire : cela permet une mise en oeuvre très souple du procédé selon l'invention.

Pour permettre un tri automatique, le module 4 de traitement envoie au module 9 d'impression un signal provoquant l'impression en même temps que l'adresse et/ou le nom du destinataire, d'un autre code, par exemple sous la forme d'un code à barres, qui va permettre à un dispositif 10 de procéder à un tri automatique du courrier ainsi renseigné.

Dans le cas d'un abonné sur liste rouge, c'est-à-dire sur la liste des numéros de téléphone devant rester confidentiels, il faut empêcher la lecture du numéro de téléphone inscrit par l'émetteur. Si l'impression de l'adresse et/ou du nom se fait directement dans le cadre C₁ de l'enveloppe, on peut prévoir l'impression d'une barre rectangulaire noire dans le cadre D qui entoure une zone A. Si l'impression se fait sur une étiquette apposée sur l'enveloppe, on lui donne des dimensions suffisantes pour qu'elle recouvre les zones A et B₁.

Une autre façon d'opérer pour empêcher la lecture du numéro de téléphone inscrit par l'émetteur consiste à introduire l'enveloppe E dans une pochette additionnelle, qui porte seulement l'adresse et le nom du destinataire. L'insertion de l'enveloppe dans la pochette s'effectue, de préférence, avant que l'enveloppe n'atteigne le module d'impression 9. Dans le cas où l'enveloppe comporte des zones sur lesquelles l'expéditeur peut s'identifier, par exemple au verso de l'enveloppe, la pochette additionnelle comporte un verso transparent pour ne pas masquer cette inscription.

Sans être pour autant sur liste rouge, certains usagers n'ont pas envie de voir leur numéro de téléphone affiché sur les enveloppes du courrier qui leur est destiné. Dans ce cas, à leur demande, on peut introduire dans la base de données 4a un code qui fait que l'enveloppe est traitée comme si l'abonné était en liste rouge.

Le traitement par pochette peut se faire à la demande des émetteurs, à la demande des destinataires ou encore par décision de l'opérateur postal ; lequel peut décider de traiter tout le courrier de cette façon.

Il est possible d'insérer dans la même pochette un document, par exemple un document d'information, un document publicitaire, une circulaire, un mailing..

L'introduction dans la pochette de documents additionnels peut être accompagnée d'une opération de pesée pour ne pas dépasser le poids maximal correspondant au coût de timbrage prévu initialement. Ceci permet de réaliser des mailings publicitaires sans coûts supplémentaires.

Dans le cas d'un traitement de mailing, l'émetteur peut remettre au service de traitement le nombre d'exemplaires voulus de son mailing ainsi qu'un listing de numéros de téléphone et l'on met un exemplaire du mailing dans une pochette, sur laquelle le nom et l'adresse des destinataires sont imprimés à partir du listing.

Avec l'accord de l'opérateur postal, l'émetteur, une société par exemple, peut utiliser des enveloppes munies, en pré-impression éventuellement, d'un code permettant de l'identifier. Le courrier, envoyé sans timbrage dans de telles enveloppes, est alors pesé et facturé par la suite du montant correspondant au traitement de son courrier.

Une telle disposition simplifie considérablement le service du courrier des entreprises et nécessite simplement un module supplémentaire de lecture de code (généralement le numéro de téléphone de l'émetteur complété par un code confidentiel) et un enregistrement dans un fichier permettant la facturation. Avantageusement, ce code attribué à chaque client de l'opérateur postal varie selon le jour, afin d'éviter des risques de fraude.

Cette facturation peut être payée à l'avance via un « crédit » représentant un « timbrage » : dans ce cas l'opérateur postal vend un nombre d' « unités d'affranchissement », ou leur valeur en euros, à un client identifié par son numéro de téléphone. A l'occasion de chaque courrier, les opérations de pesage et de recherche du tarif dans une base de données en fonctions du couple émetteur/destinataire - ou bureau d'émission/lieu du destinataire - permettent de décrémenter le nombre d'euros restants.

De la même manière, l'opérateur postal peut, en fonction du poids et du couple émetteur/destinataire - ou bureau d'émission/lieu du destinataire - incrémenter un montant qui sera ensuite facturé à l'émetteur ou au destinataire selon les cas.

Il est également possible, selon la présente invention, d'établir un service analogue au service téléphonique en P.C.V. Un destinataire peut faire savoir qu'il accepte, éventuellement pendant une période donnée, de recevoir du courrier non timbré, le coût de l'acheminement lui étant facturé. Cette indication introduite dans le module 4a assure que le courrier accepté sans timbrage est pesé et facturé par la suite du montant correspondant au traitement de ce courrier non timbré, par utilisation d'un fichier particulier de frais de courrier en vue de la facturation du destinataire.

On peut utiliser le procédé selon l'invention lorsque plusieurs personnes se partagent un même numéro de téléphone (famille, entreprise, association...).

Dans tous les cas, l'expéditeur peut s'identifier aussi grâce à son numéro de téléphone ; cela permet à l'émetteur de poster une lettre sans la timbrer, le dispositif de traitement peut alors peser la lettre et facturer l'émetteur.

Dans tous les exemples décrits ci-dessus, on a pris comme clé d'identification du destinataire son numéro de téléphone ; mais selon la présente invention, on peut aussi utiliser son numéro de fax (qui est un numéro de téléphone) ; ou l'adresse électronique du destinataire.

Dans le cas où une personne n'a pas de téléphone, ni de fax, ni d'adresse électronique, il est possible de lui attribuer un numéro de téléphone "virtuel" qui est introduit dans la base de données 5 à la place d'un numéro « réel » de téléphone.

Un exemple de réalisation particulier qui ne fait pas partie de l'invention s'applique au courrier électronique (couramment appelé e-mail). Dans le cas du courrier électronique, on utilise des moyens matériels ou logiciels analogues à ceux décrits en référence aux figures 4 à 6.

On emploie comme élément d'identification le numéro de téléphone.

Un module 2 de lecture électronique lit ce numéro ; le transmet sous forme numérique au module 4 de traitement; lequel interroge une base de données contenant les adresses e-mail utilisées selon le principe de l'annuaire inverse. La base de données 5 transmet alors l'adresse e-mail au module d'écriture électronique 9 chargé de recomposer le message électronique avec l'adresse e-mail transmise.

Dans ce cas, des moyens matériels ou logiciels analogues à l'installation de la figure 4 suffisent.

Un module additionnel 4a peut être utilisé pour donner des instructions complémentaires, comme par exemple un transfert d'adresse e-mail ou la copie vers une autre adresse e-mail.

De manière similaire, dans le cas du courrier postal ou du courrier électronique, l'envoi passe dans le moyen de tri et/ou de routage, reçoit un complément de traitement ou est dirigé vers un centre de traitement spécifique.

Ce procédé permet de faire bénéficier le courrier (postal ou électronique) de services complémentaires, voisins de ceux que les divers opérateurs téléphoniques offrent à leurs clients, services communément appelés "services à valeur ajoutée".

Dans tout ce qui est décrit ci-dessus, la première opération est constituée par la lecture d'un numéro de téléphone, cette opération permettant d'ajouter ensuite des services additionnels, « services à valeur ajoutée », au choix de l'émetteur et/ou du destinataire.

L'émetteur peut aussi écrire l'adresse du destinataire et inscrire en sus son propre numéro de téléphone et son code confidentiel au recto de l'enveloppe, pour bénéficier du service de pesage et de facturation, ce qui est intéressant pour alléger les charges du service courrier dans une entreprise, et, pour les particuliers, éviter les contraintes liées à l'affranchissement. L'entreprise peut bénéficier d'un code qui lui est propre pour une facturation automatique.

Chacun des services à valeur ajoutée décrits précédemment peut être associé au courrier indépendamment des autres services.

## Revendications

1. Dispositif de traitement de courrier postal adressé en utilisant comme indication du destinataire un numéro de téléphone en chiffres arabes, figurant dans au moins une base de données existante, comportant en combinaison:
- des moyens (2) pour lire sur le courrier le numéro de téléphone du destinataire,
- des moyens (4) pour transmettre ledit numéro de téléphone lu pour interroger la base (5) de données fonctionnant en « annuaire inversé », de manière à recevoir un signal de réponse comportant au moins l'adresse de destination correspondant audit numéro de téléphone, et éventuellement le nom du destinataire,
- des moyens pour identifier une à une les enveloppes au moment où elles sont lues,
- des moyens pour leur conférer une à une un numéro d'ordre et l'enregistrer en mémoire,
- des moyens pour imprimer le numéro d'ordre sur l'enveloppe,
- des moyens pour associer ce numéro d'ordre au numéro de téléphone,
- des moyens pour permettre l'impression de l'adresse postale seulement s'il y a concordance entre le numéro d'ordre lié au signal d'impression et le numéro d'ordre de l'enveloppe,
- des moyens pour imprimer sur une pochette ou apposer une étiquette sur une pochette,
- des moyens pour insérer l'enveloppe dans la pochette,
- et des moyens pour diriger la pochette en fonction de ladite adresse de délivrance au destinataire.

2. Dispositif selon la revendication 1 comportant:
- entre les moyens (2) de lecture et les moyens (4) de traitement, un module (13) comprenant un programme d'enregistrement des enveloppes, et un module (14) comprenant un fichier des enveloppes traitées;
- et entre les moyens (2) de lecture et les moyens (9) d'écriture, un module (2a) d'impression de code tel qu'un code à barres; de sorte que:
- la lecture du numéro de téléphone par les moyens (2) de lecture déclenche l'enregistrement de l'enveloppe par le module (13) comprenant un programme d'enregistrement des enveloppes qui lui affecte un numéro d'ordre; commande l'impression sur l'enveloppe d'un code tel qu'à barres correspondant audit numéro d'ordre, par le module (2a) d'impression, commande la mise en mémoire, dans le fichier (14) des enveloppes traitées, du numéro de téléphone et du numéro d'ordre.

3. Dispositif selon la revendication 3, **caractérisé en ce que** les moyens de traitement:
- interrogent le fichier (14) des enveloppes traitées pour en extraire le numéro de téléphone et le numéro d'ordre; et
- interrogent la base de données (5) pour obtenir l'adresse effective correspondant au numéro de téléphone lu.

4. Dispositif selon la revendication 2, **caractérisé en ce que** les moyens (4) de traitement commandent l'écriture de l'adresse par les moyens (9) d'écriture après vérification de la conformité entre le numéro d'ordre porté par l'enveloppe et ladite adresse.

5. Dispositif selon la revendication 1, comportant: des moyens pour masquer le numéro de téléphone inscrit sur l'enveloppe postale, par exemple par impression d'une barre noire sur le numéro ou par apposition d'une étiquette sur l'emplacement du numéro, de manière à le recouvrir, ou par insertion de l'enveloppe dans une pochette sur laquelle sont apposées les coordonnées du destinataire.

6. Dispositif selon la revendication 1 pour le traitement de courrier postal, comportant un ou plusieurs des moyens additionnels suivants:
- des moyens pour classement et introduction des enveloppes (E) dans un lecteur optique (2);
- des moyens de transport des enveloppes (E) d'un module à l'autre;
- des moyens pour l'impression, en même temps que l'impression de l'adresse, d'un code permettant le tri automatique;
- des moyens pour apposer une étiquette comportant l'adresse du destinataire sur l'enveloppe;

7. Dispositif selon la revendication 1 pour le traitement de courrier postal, comportant : avant le module (2) de lecture, un module (1) d'entrée des enveloppes; et après le module (9) d'écriture, un module (10) de répartition automatique des enveloppes dans des bacs (11), les modules d'entrée (1) de lecture (2), d'écriture (9) et de répartition (10) étant parcourus successivement par les enveloppes.

## Claims

1. Device for processing postal mail, particularly addressed by using as an indication of the addressee a telephone number in Arabic numerals found in at least one existing database, comprising in combination:
- means (2) to read on the mail an identification number of the addressee
- means (4) to transmit said read identification number so as to interrogate a database (5) functioning as a "reverse directory"; and to interrogate the database (5) functioning as a "reverse directory", so as to receive a response signal comprising at least the address of the addressee corresponding to said identification number, and if desired the name of the addressee;
- means to register the envelopes one by one at the time they are read
- means to give them one by one an order number and to record it in a memory;
- means to print the order number on the envelope;
- means to associate this order number to that of the identification;
- means to permit the printing of the postal address only if there is agreement between the order number related to the printing signal and the order number of the envelope;
- means permitting printing on a packet or applying a label on a packet;
- means to insert the envelope in the packet
- means to direct the mail as a function of said address for delivery to the addressee.

2. Device according to claim 1, comprising:
- between the reading module (2) and the processing module (4), a module (13) comprising a program for recording envelopes, and a module (14) comprising a file of processed envelopes;
- and between the reading module (2) and the writing module (9), a module (2a) for printing a code such as a barcode; such that:
- the reading of the telephone number by the reading module (2) triggers the recordation of the envelope by the module (13) comprising a program for recording envelopes which gives it an order number; controls the printing on the envelope of a code such as a barcode corresponding to said order number, by the printing module (2a); controls the memorization, in the file (14) of processed envelopes, of the telephone number and of the order number.

3. Device according to claim 2, **characterized in that** the processing module:
- interrogates the file (14) of processed envelopes to extract from it the telephone number and the order number;
- interrogates the database (5) to obtain the effective address corresponding to the telephone number read.

4. Device according to claim 2 for the processing of postal mail, **characterized in that** the processing module (4) controls the writing of the address by the writing module (9) after verification of conformity between the order number borne by the envelope and said address.

5. Device according to claim 1, comprising means to mask the telephone number written on the postal envelope: for example by printing a black bar over the number or by application of a label on the place of the number, so as to cover it, or by insertion of the envelope into a packet on which are affixed the coordinates of the addressee.

6. Device according to claim 1 for the processing of postal mail, comprising one or several of the following additional means:
- means to classify and introduce envelopes (E) into an optical reader (2);
- means to transport the envelopes (E) from one module to the other;
- means to print, at the same time as printing the address, a code permitting automatic sorting;
- means to apply a label comprising the address of the addressee on the envelope;

7. Device according to claim 1 for the processing of postal mail, comprising: before the reading module (2), an input module (1) for envelopes; and after the writing module (9), a module (10) for automatic distribution of the envelopes into bins (11), the input module (1), the reading module (2), the writing module (9) and the distribution module (10) being traversed successively by the envelopes.

## Patentansprüche

1. Vorrichtung zur Bearbeitung adressierter Postschreiben unter Verwendung der Angabe des Empfängers in Form einer Telefonnummer in arabischen Ziffern, welche in mindestens einer bestehenden Datenbank aufgeführt ist. Die Vorrichtung enthält in kombinierter Form:
- Mittel (2) zum Lesen der Telefonnummer des Empfängers auf dem Brief;
- Mittel (4) zur Übermittlung dieser gelesenen Telefonnummer zur Abfrage der als "umgekehrtes Telefonbuch" fungierenden Datenbank (5), sodass ein Antwortsignal erhalten wird, welches mindestens die der genannten Telefonnummer entsprechende Zieladresse und eventuell auch den Namen des Empfängers enthält;
- Mittel, mit denen die Umschläge in dem Moment, in dem sie gelesen werden, nach und nach identifiziert werden;
- Mittel, mit denen ihnen nach und nach eine laufende Nummer zugeteilt und im Speicher eingetragen wird;
- Mittel zum Aufdrucken dieser laufenden Nummer auf dem Umschlag;
- Mittel für die Zuordnung dieser laufenden Nummer zur Telefonnummer;
- Mittel, die den Druck der Postanschrift nur dann ermöglichen, wenn eine Übereinstimmung zwischen der mit dem Drucksignal verknüpften laufenden Nummer und der laufenden Nummer des Umschlags besteht;
- Mittel zum Druck auf einer Versandtasche oder zur Anbringung eines Etiketts auf einer Versandtasche;
- Mittel zum Hineinlegen des Umschlages in die Versandtasche,
- sowie Mittel, um die Versandtasche entsprechend der genannten Lieferadresse an den Empfänger weiterzuleiten.

2. Vorrichtung gemäß Anspruch 1. Diese umfasst:
- zwischen den Lesemitteln (2) und Bearbeitungsmitteln (4) ein Modul (13) mit einem Programm zur Aufzeichnung der Umschläge sowie ein Modul (14) mit einer Datei der bearbeiteten Umschläge,
- und zwischen den Lesemitteln (2) und Schreibmitteln (9) ein Modul (2a) zum Drucken des Codes, beispielsweise in Form eines Barcodes, sodass:
- das Lesen der Telefonnummer mit den Lesemitteln (2) folgende Vorgänge auslöst: die Aufzeichnung des Umschlages durch das Modul (13), das das Programm zur Aufzeichnung der Umschläge enthält und ihm eine laufende Nummer zuteilt; die Steuerung des Drucks eines Codes, wie beispielsweise eines Barcodes, durch das Druckmodul (2a) auf den Umschlag; die Steuerung der Speicherung der Telefonnummer und der laufenden Nummer im Speicher (14) der bearbeiteten Umschläge.

3. Vorrichtung gemäß Anspruch 2, **gekennzeichnet dadurch, dass** die Bearbeitungsmittel:
- die Datei (14) der bearbeiteten Umschläge abfragen, um die Telefonnummer und laufende Nummer aus ihr zu extrahieren; und
- die Datenbank (5) abfragen, um die der gelesenen Telefonnummer entsprechende tatsächliche Adresse zu erhalten.

4. Vorrichtung gemäß Anspruch 2, **dadurch gekennzeichnet, dass** die Bearbeitungsmittel (4) nach Prüfung der Übereinstimmung von laufender Nummer auf dem Umschlag und Adresse das Schreiben der Adresse durch die Schreibmittel (9) auf den Umschlag steuern.

5. Vorrichtung gemäß Anspruch 1, mit: Mitteln zum Verdecken der auf den Postumschlag geschriebenen Telefonnummer, beispielsweise durch Drucken eines schwarzen Balkens auf der Nummer oder durch Anbringung eines Etiketts am Platz der Nummer, um so die Nummer zu verdecken, oder durch das Hineinlegen des Umschlags in eine mit der Adresse des Empfängers bedruckte Versandtasche.

6. Vorrichtung gemäß Anspruch 1 zur Bearbeitung von Postschreiben mit einem oder mehreren der folgenden Zusatzmittel:
- Mittel zum Sortieren und Hineinlegen der Umschläge (E) in ein optisches Lesegerät (2);
- Mittel zur Beförderung der Umschläge (E) von einem Modul zum anderen;
- Mittel, mit denen gleichzeitig mit dem Aufdruck der Adresse ein Code zur Ermöglichung einer automatischen Sortierung aufgedruckt wird;
- Mittel zur Anbringung eines Etiketts mit der Adresse des Empfängers auf dem Umschlag.

7. Vorrichtung gemäß Anspruch 1 zur Bearbeitung von Postschreiben. Diese umfasst: vor dem Lesemodul (2) ein Modul (1) für den Eingang der Umschläge und nach dem Schreibmodul (9) ein Modul (10) zur automatischen Verteilung der Umschläge auf Fächer (11), wobei die Eingangsmodule (1), die Lesemodule (2), die Schreibmodule (9) und die Verteilmodule (10) nach und nach von den Umschlägen durchlaufen werden.
